(19) Europäisches Patentamt / European Patent Office / Office européen des brevets

(11) **EP 2 692 708 B1**

(12) **EUROPEAN PATENT SPECIFICATION**

(45) Date of publication and mention
of the grant of the patent:
**04.03.2015 Bulletin 2015/10**

(21) Application number: **13190935.0**

(22) Date of filing: **24.08.2010**

(51) Int Cl.:
*C03C 27/12* (2006.01)          *B32B 17/10* (2006.01)
*C08K 3/22* (2006.01)          *C08K 5/3467* (2006.01)
*C08L 101/00* (2006.01)          *C09J 11/04* (2006.01)
*C09J 11/06* (2006.01)          *C09J 201/00* (2006.01)

(54) **Intermediate film for laminated glass, and laminated glass**

Zwischenfilm für Verbundglas sowie Verbundglas

Film intermédiaire pour verre feuilleté et verre feuilleté

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **24.08.2009 JP 2009193720
29.09.2009 JP 2009225598**

(43) Date of publication of application:
**05.02.2014 Bulletin 2014/06**

(62) Document number(s) of the earlier application(s) in
accordance with Art. 76 EPC:
**10811837.3 / 2 471 761**

(73) Proprietor: **Sekisui Chemical Co., Ltd.
Osaka 530-8565 (JP)**

(72) Inventors:
• **Fukatani, Juichi
Kouka-shi, Shiga 528-8585 (JP)**
• **Kitano, Hirofumi
Kouka-shi, Shiga 528-8585 (JP)**
• **Ii, Daizou
Mishima-gun, Osaka 618-8589 (JP)**
• **Okabayashi, Takazumi
Mishima-gun, Osaka 618-8589 (JP)**
• **Tsunoda, Ryuta
Kouka-shi, Shiga 528-8585 (JP)**

(74) Representative: **Ter Meer Steinmeister & Partner
Patentanwälte mbB
Mauerkircherstrasse 45
81679 München (DE)**

(56) References cited:
**EP-A1- 1 419 999**

## Description

### TECHNICAL FIELD

The present invention relates to an interlayer film for laminated glass used for automobiles, buildings, and the like. More specifically, the present invention relates to an interlayer film for laminated glass which can provide an obtainable laminated glass with enhanced heat insulation property, and also relates to a laminated glass produced using the interlayer film for laminated glass.

### BACKGROUND ART

A laminated glass is a safety glass because few glass fragments are scattered even if it is broken by impact from the outside. Therefore, the laminated glass has been used widely for automobiles, railway cars, aircrafts, vessels, buildings, and the like. The laminated glass has an interlayer film for laminated glass interposed between a pair of glass sheets. Such a laminated glass to be used for opening portions of automobiles and buildings is required to have excellent heat insulation property.

The energy amount of infrared rays having a wavelength of 780 nm or more, which is longer than the wavelength of visible light, is smaller than that of UV rays. However, infrared rays have a large thermal effect and are released as heat once absorbed in a substance. Therefore, infrared rays are commonly referred to as heat rays. In order to enhance the heat insulation property of a laminated glass, it is necessary to sufficiently insulate infrared rays.

As a means effectively insulating the infrared rays (heat rays), the Patent Document 1 discloses an interlayer film for laminated glass containing tin-doped indium oxide particles (ITO particles) or antimony-doped tin oxide particles (ATO particles).

Patent Document 1: WO 01/25162 Al

### SUMMARY OF THE INVENTION

### PROBLEMS TO BE SOLVED BY THE INVENTION

Recently, further enhancement of the heat insulation property of a conventional interlayer film containing ITO particles or ATO particles has been demanded. However, the ITO particles and the ATO particles do not absorb near infrared rays sufficiently. Accordingly, as disclosed in Patent Document 1, it may be difficult to significantly increase heat insulation property of the laminated glass by simple addition of ITO particles or ATO particles to the interlayer film.

For example, California Air Resources Board (CARB) in the United States has suggested reduction of carbon dioxide discharged from automobiles in order to reduce greenhouse gases. To achieve the reduction of carbon dioxide discharged from automobiles, the CARB has considered controlling heat energy entering automobiles through the laminated glass to reduce fuels consumed for running air conditioners, which may contribute to improvement of fuel efficiency. Specifically, the CARB has planned to enforce Cool Cars Standards.

The planned requirements of the Cool Cars Standards was specifically not higher than 50% of Total Solar Transmittance (Tts) of laminated glass used for automobiles in 2012 and not higher than 40% of the Tts of the laminated glass in 2016. Here, the Tts is an index of heat insulating performance.

Glass on which a thin metallic film is deposited or heat ray-reflecting laminated glass produced using heat reflecting PET, which is of a so-called heat reflecting type, reflects not only infrared rays but also communication waves having communication wavelengths. In the case of using heat reflecting laminated glass for wind shields, the glass needs to have its heat ray-reflecting part hollowed out so as to correspond to various censors. As a result, the entire surface of the wind shields produced using heat ray-reflecting laminated glass having the Tts of 50% has the Tts of about 53% on average. Accordingly, the Tts up to 53% was planned to be allowed with regard to a laminated glass of the type which transmits communication waves and absorbs infrared rays.

At the time point of August in 2010, enforcement of the Cool Cars Standards is avoided. However, the trend still demands a laminated glass having low Tts.

In addition, the laminated glass is required to have not only excellent heat insulation property but also excellent visible transmittance. For example, the visible transmittance is preferably not lower than 70%. Namely, the requirement is lowering of the Tts while maintaining the high visible transmittance.

In the case of using an interlayer film for laminated glass containing heat insulating particles as disclosed in Patent Document 1, it is very difficult to obtain a laminated glass satisfying both excellent heat insulation property and excellent visible transmittance. Specifically, it is very difficult to obtain a laminated glass satisfying, for example, both the Tts of not higher than 53% and the visible transmittance of not lower than 70%.

The present invention is aimed to provide an interlayer film for laminated glass which can provide an obtainable laminated glass with excellent heat insulation property and high visible transmittance, and a laminated glass produced using the interlayer film for laminated glass.

## MEANS FOR SOLVING THE PROBLEMS

According to a broad aspect of the present invention, the present invention provides an interlayer film for laminated glass comprising: a polyvinyl acetal resin; a plasticizer; heat insulating particles; and at least one compound selected from the group consisting of a phthalocyanine compound, a naphtalocyanine compound, and an anthracyanine compound, wherein, when an amount A represents the amount of the heat insulating particles to 100 parts by weight of the thermoplastic resin and an amount B represents the amount of the compound to 100 parts by weight of the thermoplastic resin, the amount A is 0.1 to 3 parts by weight and a ratio of the amount A to the amount B (the amount A/ the amount B) is 3 to 2000.

According to a specific aspect of the interlayer film for laminated glass of the present invention, the ratio (the amount A/ the amount B) is 6 to 1300.

According to another specific aspect of the interlayer film for laminated glass of the present invention, the ratio (the amount A/ the amount B) is 25 to 600.

According to another specific aspect of the interlayer film for laminated glass of the present invention, the amount A is 0.2 to 2 parts by weight.

According to another specific aspect of the interlayer film for laminated glass of the present invention, the amount B is 0.001 to 0.02 parts by weight.

According to another specific aspect of the interlayer film for laminated glass of the present invention, the compound is at least one compound selected from the group consisting of phthalocyanine, a phthalocyanine derivative, naphtalocyanine, and a naphtalocyanine derivative.

According to another specific aspect of the interlayer film for laminated glass of the present invention, the heat insulating particles are metal oxide particles.

According to another specific aspect of the interlayer film for laminated glass of the present invention, the heat insulating particles are tin-doped indium oxide particles.

The laminated glass of the present invention comprises: a first and a second laminated glass components; and an interlayer film interposed between the first and the second laminated glass components, wherein the interlayer film is an interlayer film for laminated glass according to the present invention.

## EFFECT OF THE INVENTION

The interlayer film for laminated glass of the present invention comprises a thermoplastic resin; a plasticizer; heat insulating particles; and at least one compound selected from the group consisting of a phthalocyanine compound, a naphtalocyanine compound, and an anthracyanine compound. The amount A of the heat insulating particles is 0.1 to 3 parts by weight and the ratio of the amount A of the heat insulating particles to the amount B of the compound (amount A/ amount B) is 3 to 2000. Accordingly, it is possible to obtain a laminated glass having excellent heat insulation property and sufficiently high visible transmittance.

## BRIEF DESCRIPTION OF THE DRAWING

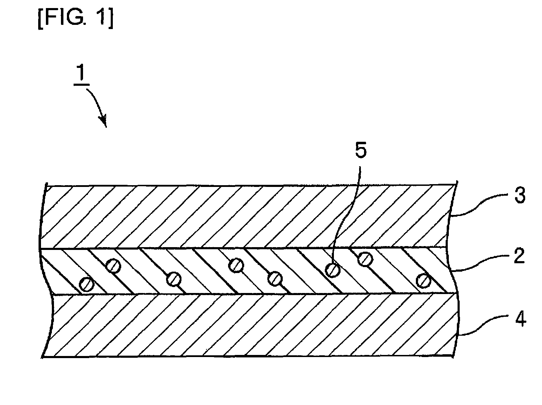

Fig. 1 is a cross-sectional view schematically showing one example of a laminated glass including an interlayer film for laminated glass according to one embodiment of the present invention.

## MODES FOR CARRYING OUT THE INVENTION

The present invention is specifically described below.

The interlayer film for laminated glass of the present invention contains a thermoplastic resin, a plasticizer, heat insulating particles, and at least one compound selected from the group consisting of a phthalocyanine compound, a naphtalocyanine compound, and an anthracyanine compound. Hereinafter, at least one compound selected from the group consisting of a phthalocyanine compound, a naphtalocyanine compound, and an anthracyanine compound may also be referred to as a compound X.

In the interlayer film for laminated glass of the present invention, when the amount A represents the amount (parts by weight) of the heat insulating particles to 100 parts by weight of the thermoplastic resin and the amount B represents the amount (parts by weight) of the compound X to 100 parts by weight of the thermoplastic resin, the amount A is 0.1 to 3 parts by weight and a ratio of the amount A to the amount B (the amount A/ the amount B) is 3 to 2000. When the heat insulating particles are metal oxide particles, the amount A of the heat insulating particles indicates the amount of the metal oxide particles. When the heat insulating particles are tin-doped indium oxide particles (ITO particles), the amount A of the heat insulating particles indicates the amount of the ITO particles.

The present invention is mainly characterized in that heat insulating particles and the compound X are used in combination and that their amounts satisfies the above relationship. Such an interlayer film for laminated glass enables production of a laminated glass having excellent heat insulation property and sufficiently high visible transmittance. Moreover, it is possible to obtain a laminated glass having sufficiently low Tts (Total Solar Transmittance) and sufficiently high visible transmittance. Namely, use of the interlayer film for laminated glass of the present invention enhances the heat insulation property and the transparency of the laminated glass.

In addition, use of the interlayer film for laminated glass of the present invention enables, for example, production of a laminated glass satisfying the requirement of Cool Cars Standards which has been planned to be enforced by California Air Resources Board (CARB). Specifically, a laminated glass is allowed to have the Tts of not higher than 53%. Moreover, the laminated glass is allowed to have the visible transmittance of not lower than 70%. At the time point of August in 2010, enforcement of the Cool Cars Standards is avoided. However, the trend still demands a laminated glass having low Tts.

Conventionally, in the case of using an interlayer film for laminated glass containing heat insulating particles such as ITO particles, it is very difficult to obtain a laminated glass satisfying both the Tts of not higher than 53% and the visible transmittance of not lower than 70%. However, use of the interlayer film for laminated glass of the present invention enables production of a laminated glass satisfying both the Tts of not higher than 53% and the visible transmittance of not lower than 70%. Accordingly, it is possible to obtain a laminated glass compliant with the Cool Cars Standards planned to be enforced in the United States.

In the present description, the Tts and the visible transmittance are performances demanded by the Cool Cars Standards. For example, the Tts is measured in accordance with the measuring method defined by the Cool Cars Standards which has been planned to be enforced. The visible transmittance is, for example, measured in accordance with JIS R3211 (1998).

(Thermoplastic resin)

The thermoplastic resin contained in the interlayer film for laminated glass of the present invention is a polyvinyl acetal resin. Combination use of a polyvinyl acetal resin and a plasticizer further enhances adhesion of an obtainable interlayer film to a laminated glass component.

The polyvinyl acetal resin may be produced, for example, by acetalizing polyvinyl alcohol with an aldehyde. The polyvinyl alcohol may be produced, for example, by saponifying polyvinyl acetate. The saponification degree of the polyvinyl alcohol is commonly 80 to 99.8 mol%.

The lower limit of the polymerization degree of the polyvinyl alcohol is preferably 200, and more preferably 500. The upper limit thereof is preferably 3000, and more preferably 2500. A too-low polymerization degree tends to lower the penetration resistance of the laminated glass. A too-high polymerization degree may cause difficulty in forming an interlayer film for laminated glass.

The aldehyde is not particularly limited, and commonly, a C1 to C10 aldehyde is favorably used. Examples of the C1 to C10 aldehyde include n-butyl aldehyde, isobutyl aldehyde, n-valeraldehyde, 2-ethylbutyl aldehyde, n-hexylaldehyde, n-octylaldehyde, n-nonylaldehyde, n-decylaldehyde, formaldehyde, acetaldehyde, and benzaldehyde. Preferable among these are propionaldehyde, n-butyl aldehyde, isobutyl aldehyde, n-hexylaldehyde, and n-valeraldehyde. Further, propionaldehyde, n-butyl aldehyde, and isobutyl aldehyde are more preferable. Moreover, n-butyl aldehyde is still more preferable. Only one species thereof may be used, or two or more species thereof may be used in combination.

The hydroxy group content (the amount of hydroxy group) in the polyvinyl acetal resin is preferably 15 to 40 mol%. The lower limit of the content is more preferably 18 mol% and the upper limit thereof is more preferably 35 mol%. Too-low hydroxy group content may lower the adhesion of the obtainable interlayer film. Too-high hydroxy group content lowers the flexibility of the obtainable interlayer film, deteriorating the handleability of the interlayer film.

The hydroxy group content in the polyvinyl acetal resin is a mole fraction expressed as percent obtained by dividing the amount of ethylene groups to which hydroxy groups are bonded by the total amount of ethylene groups in the main chain. It is possible to obtain the amount of ethylene groups to which hydroxy groups are bonded, for example, by measuring the amount of ethylene groups to which hydroxy groups of polyvinyl alcohol as a raw material are bonded in accordance with JIS K6726 "Test Methods for Polyvinyl Alcohol".

The lower limit of the acetylation degree (the amount of acetyl groups) of the polyvinyl acetal resin is preferably 0.1 mol%, more preferably 0.3 mol%, and still more preferably 0.5 mol%. The upper limit thereof is preferably 30 mol%, more preferably 25 mol%, and still more preferably 20 mol%. Too-low acetylation degree may lower the compatibility between the polyvinyl acetal resin and the plasticizer. Too-high acetylation degree may lower the moisture resistance of the interlayer film.

The acetylation degree is obtained as described below. The amounts of ethylene groups to which acetal groups are bonded and to which ethylene groups are bonded are subtracted from the total amount of ethylene groups in the main chain. The obtained value is divided by the total amount of ethylene groups in the main chain. The obtained mole fraction expressed as percent is the acetylation degree. The amount of ethylene groups to which acetal groups are bonded can be measured in accordance with JIS K6728 "Test Methods for Polyvinyl butyral".

The lower limit of the acetalization degree of the polyvinyl acetal resin (the butyralization degree when the polyvinyl acetal resin is a polyvinyl butyral resin) is preferably 60 mol%, and more preferably 63 mol%. The upper limit thereof is preferably 85 mol%, more preferably 75 mol%, and still more preferably 70 mol%. A too-low acetalization degree may lower the compatibility between the polyvinyl acetal resin and the plasticizer. A too-high acetalization degree may prolong the reaction time needed for producing the polyvinyl acetal resin.

The acetalization degree is a mole fraction expressed as percent obtained by dividing the amount of ethylene groups to which acetal groups are bonded by the total amount of ethylene groups in the main chain.

It is possible to obtain the acetalization degree by measuring the acetylation degree (the amount of acetyl groups) and the hydroxy group content (the amount of vinyl alcohol) in accordance with JIS K6728 "Test Methods for Polyvinyl butyral", calculating the molar fractions based on the measurement results, and subtracting the molar fractions of the acetylation degree and of the hydroxy group content from 100 mol%.

when a polyvinyl butyral resin is used as the polyvinyl acetal resin, it is possible to obtain the acetalization degree (butiralyzation degree) and acetylation degree (the amount of acetyl groups) from the measurements in accordance with JIS K6728 "Test Methods for Polyvinyl butyral".

(Plasticizer)

The plasticizer contained in the interlayer film for laminated glass of the present invention is not particularly limited, and a conventionally-known plasticizer may be used. Only one species of the plasticizer may be used, or two or more species thereof may be used in combination.

Examples of the plasticizer include organic ester plasticizers such as monobasic organic acid esters, polybasic organic acid esters, and phosphate plasticizers such as organic phosphate plasticizers and organic phosphorous plasticizers. Among these, organic ester plasticizers are preferable. The plasticizer is preferably in a liquid form.

The monobasic organic acid esters are not particularly limited, and examples thereof include: glycol esters obtained by reaction between glycol and a monobasic organic acid; and esters of a monobasic organic acid and one of triethylene glycol and tripropylene glycol. Examples of the glycol include triethylene glycol, tetraethylene glycol, and tripropyl glycol. Examples of the monobasic organic acid esters include butyric acid, isobutyric acid, caproic acid, 2-ethylbutyrate, heptylic acid, n-octylic acid, 2-ethylhexilic acid, n-nonylic acid, and decylic acid.

The polybasic organic acid esters are not particularly limited, and may be an ester compound of a polybasic organic acid and a C4 to C8 linear-, or branched alcohol. Examples of the polybasic organic acid include adipic acid, sebacic acid, and azelaic acid.

The organic ester plasticizer is not particularly limited, and examples thereof include triethylene glycol di-2-ethyl butyrate, triethylene glycol di-2-ethyl hexanoate, triethylene glycol dicaprylate, triethylene glycol di-n-octanoate, triethylene glycol di-n-heptanoate, tetraethylene glycol di-n-heptanoate, dibutyl cebacate, dioctyl azelate, dibutyl carbitol adipate, ethylene glycol di-2-ethylbutyrate, 1,3-propylene glycol di-2-ethylbutyrate, 1,4-butylene glycol di-2-ethyl butyrate, diethylene glycol di-2-ethyl hexanoate, dipropyrene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptylnonyl adipate, dibutyl sebacate, oil-modified alkyd sebacate, and a mixture of phosphate ester and ester adipate. An organic ester plasticizer other than these may also be used. Moreover, an ester adipate other than the above ester adipates may be used.

The organic phosphate plasticizer is not particularly limited, and examples thereof include tributoxyethyl phosphate, isodecylphenyl phosphate, and triisopropyl phosphate.

The plasticizer is preferably at least one species selected from the group consisting of triethyleneglycol di-2-ethylhexanoate (3GO) and triethyleneglycol di-2-ethylbutylate (3GH). Further, triethyleneglycol di-2-ethylhexanoate is more preferable.

The amount of the plasticizer in the interlayer film for laminated glass of the present invention is not particularly limited. The lower limit of the amount of the plasticizer is preferably 25 parts by weight, and more preferably 30 parts by weight for each 100 parts by weight of the thermoplastic resin. The upper limit thereof is preferably 60 party by weight, and more preferably 50 parts by weight. When the amount of the plasticizer satisfies the above preferable lower limit, the penetration resistance of the obtainable laminated glass is further enhanced. Moreover, when the amount of the plasticizer satisfies the above upper limit, the transparency of the interlayer film is further enhanced.

(Heat insulating particles)

The heat insulating particles contained in the interlayer film for laminated glass of the present invention are not particularly limited. Only one species of the heat insulating particles may be used, or two or more species of the heat insulating particles may be used in combination.

The energy amount of infrared rays having a wavelength of 780 nm or longer, which is longer than the wavelength of a visible light, is smaller than that of UV rays. However, infrared rays have a large thermal effect and are released as heat once absorbed in a substance. Therefore, infrared rays are commonly referred to as heat rays. Use of the heat insulating particles such as ITO particles efficiently insulates infrared rays (heat rays). The heat insulating particles herein refer to particles which absorb infrared rays.

Specific examples of the heat insulating particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles, and silicon-doped zinc oxide particles, and lanthanum hexaboride ($LaB_6$) particles. Heat insulating particles other than these may also be used. Among these, the metal oxide particles are preferable because of its excellent performance of insulating heat rays. Further, more preferable are the ATO particles, the GZO particles, the IZO particles, the ITO particles, and cesium-doped tungsten oxide particles. Moreover, the ITO particles are particularly preferable.

Especially, since it finely shields heat rays and are readily available, the tin doped indium oxide particles (ITO particles) are preferable.

In terms of further enhancing the transparency and the heat insulation property of the laminated glass, the lower limit of the average particle size of the heat insulating particles is preferably 10 nm, and more preferably 20 nm. The upper limit thereof is preferably 80 nm, more preferably 50 nm, and still more preferably 25 nm. When the average particle size satisfies the preferable lower limit, heat insulation property is sufficiently enhanced. When the average particle size satisfies the preferable upper limit, the heat insulating particles are allowed to have excellent dispersibility.

The "average particle size" refers to the volume average particle size. The average particle size can be measured using a particle size distribution measuring device (NIKKISO CO., LTD., "UPA-EX150").

The amount A that indicates the amount of the heat insulating particles is 0.1 to 3 parts by weight. When the amount A is within that range, the heat insulation property is sufficiently enhanced, the Tts is sufficiently lowered, and the visible transmittance is sufficiently enhanced. For example, the Tts of not higher than 53% and the visible transmittance of not lower than 70% are both achieved. When the amount A is more than 3 parts by weight, the obtainable laminated glass has a high haze value. The lower limit of the amount A is preferably 0.14 parts by weight, more preferably 0.2 parts by weight, still more preferably 0.55 parts by weight, and particularly preferably 0.6 parts by weight. The upper limit thereof is preferably 2 parts by weight, more preferably 1.8 parts by weight, and still more preferably 1.65 parts by weight. When the amount A satisfies the above preferable lower limit, the heat insulation property is further enhanced and the Tts is further lowered. When the amount A satisfies the above preferable upper limit, the visible transmittance is further enhanced.

The interlayer film for laminated glass of the present invention preferably contains the heat insulating particles in the proportion of 0.1 to 12 g/m$^2$. When the proportion of the heat insulating particles is within the above range, the heat insulation property is sufficiently enhanced, the Tts is sufficiently lowered, and the visible transmittance is sufficiently enhanced. The lower limit of the proportion of the heat insulating particles is preferably 0.5 g/m$^2$, more preferably 0.8 g/m$^2$, still more preferably 1.5 g/m$^2$, and particularly preferably 3 g/m$^2$. The upper limit thereof is preferably 11 g/m$^2$, more preferably 10 g/m$^2$, still more preferably 9 g/m$^2$, and particularly preferably 7 g/m$^2$. When the proportion satisfies the above preferable lower limit, the heat insulation property is further enhanced and the Tts is further lowered. When the proportion satisfies the preferable upper limit, the visible transmittance is further enhanced.

(Compound X)

The compound X is at least one compound selected from the group consisting of a phthalocyanine compound, a naphtalocyanine compound, and an anthracyanine compound.

The compound X is not particularly limited, and a conventionally-known phthalocyanine compound, naphtalocyanine compound, or anthracyanine compound may be used as the compound X. Only one species of the compound X may be used, or two or more species of the compounds X may be used in combination.

Combination use of the heat insulating particles and the compound X sufficiently insulates infrared rays (heat rays). Combination use of the ITO particles and the compound X more sufficiently insulates infrared rays.

Examples of the compound X include phthalocyanine, a phthalocyanine derivative, naphtalocyanine, and a naphtalocyanine derivative, anthracyanine, and an anthracyanine derivative. The phthalocyanine and the phthalocyanine derivative each preferably have a phthalocyanine skeleton. The naphtalocyanine and the naphtalocyanine derivative each preferably have a naphthalocyanine skeleton. The anthracyanine and the anthracyanine derivative each preferably have an anthracyanine skeleton.

In terms of further enhancing the heat insulation property of the laminated glass and further lowering the Tts, the compound X is preferably one compound selected from the group consisting of phthalocyanine, a phthalocyanine derivative, naphtalocyanine, and a naphtalocyanine derivative. More preferably, the compound X is at least one compound selected from the group consisting of naphtalocyanine, and a naphtalocyanine derivative.

In terms of efficiently enhancing the heat insulation property and maintaining the visible transmittance at a higher level for a long time period, the compound X preferably containing a vanadium atom or copper atom. More preferably, the compound X contains the vanadium atom. Also more preferably, the compound X contains the copper atom. The compound X preferably has a structure containing a copper atom.

The ratio of the amount A indicating the amount of the heat insulating particles to the amount B indicating the amount of the compound X (the amount A/ the amount B) is 3 to 2000. When the ratio (the amount A/ the amount B) is within the above range, the heat insulation property is sufficiently enhanced, the Tts is sufficiently lowered, and the visible transmittance is sufficiently enhanced. For example, the Tts of not higher than 53% and the visible transmittance of not lower than 70% are both achieved. The lower limit of the ratio (the amount A/ the amount B) is preferably 6, more preferably 20, still more preferably 25, and particularly preferably 30. The upper limit thereof is preferably 1300, more preferably 600, still more preferably 250, and particularly preferably 150. When the ratio (the amount A/ the amount B) satisfies the above preferable lower limit, the heat insulation property is enhanced. When the ratio (the amount A/ the amount B) satisfies the above preferable upper limit, the visible transmittance is enhanced.

The interlayer film for laminated glass of the present invention preferably contains the compound X in the proportion of 0.01 to 0.5 g/m$^2$. When the proportion of the compound X is within the above range, the heat insulation property is sufficiently enhanced, the Tts is sufficiently lowered, and the visible transmittance is sufficiently enhanced. The lower limit of the Tts is preferably 0.05 g/m$^2$, more preferably 0.08 g/m$^2$, and still more preferably 0.1 g/m$^2$. The upper limit thereof is preferably 0.4 g/m$^2$, more preferably 0.3 g/m$^2$, still more preferably 0.25 g/m$^2$, and particularly preferably 0.2 g/m$^2$. When the ratio satisfies the above preferable lower limit, the Tts is further lowered. When the ratio satisfies the above preferable upper limit, the visible transmittance is further enhanced.

The amount of the compound X (the amount B) to 100 parts by weight of the thermoplastic resin is not particularly limited. The lower limit of the amount B of the compound X is preferably 0.001 parts by weight, more preferably 0.0014 parts by weight, still more preferably 0.002 parts by weight, and particularly preferably 0.0025 parts by weight. The upper limit thereof is preferably 0.05 parts by weight, more preferably 0.025 parts by weight, still more preferably 0.02 parts by weight, and particularly preferably 0.01 parts by weight. When the amount B satisfies the above preferable lower limit, the heat insulation property is further enhanced and the Tts is further lowered. When the amount B satisfies the above preferable upper limit, the visible transmittance is further enhanced. Moreover, when the amount B satisfies the above preferable upper limit, the color saturation level of the laminated glass can be lowered. Here, the color saturation level may be determined in accordance with JIS Z8729. The upper limit of the color saturation level of the laminated glass is preferably 65, more preferably 50, still more preferably 40, and particularly preferably 35. When the color saturation level satisfies the above upper limit, coloring of the laminated glass can be suppressed.

(Other components)

The interlayer film for laminated glass of the present invention may contain, if necessary, additives such as a UV absorber, an antioxidant, a light stabilizer, a flame retardant, an antistatic agent, a pigment, a dye, an adhesion modifier, a damp-proof agent, a fluorescent brightener, and an infrared absorber. The interlayer film for laminated glass of the present invention preferably contains an antioxidant. Moreover, the interlayer film for laminated glass of the present invention preferably contains a UV absorber.

(Interlayer film for laminated glass and Laminated glass)

Fig. 1 is a cross-sectional view schematically showing one example of a laminated glass including an interlayer film for laminated glass according to one embodiment of the present invention.

A laminated glass 1 illustrated in Fig. 1 has an interlayer film 2 and a first and a second laminated glass components 3 and 4. The interlayer film 2 is used to produce a laminated glass. The interlayer film 2 is an interlayer film for laminated glass. The interlayer film 2 is positioned between the first and the second laminated glass components 3 and 4. The interlayer film 2 is interposed between the first and the second laminated glass components 3 and 4. Accordingly, in the laminated glass 1, the first laminated glass component 3, the interlayer film 2, and the second laminated glass component 4 are stacked in this order.

The interlayer film 2 contains a thermoplastic resin, a plasticizer, an ITO particle 5, and a naphthalocyanine compound. The compound X other than the naphthalocyanine compound (e.g. phthalocyanine compound) may also be used. The interlayer film 2 contains a plurality of ITO particles 5. Heat insulating particles other than the ITO particles 5 may also be used. The interlayer film 2 may have a multilayer structure including two or more layers.

Examples of the first and second laminated glass components 3 and 4 include a glass sheet and a PET (polyethyleneterephthalate) film. The laminated glass 1 may be a laminated glass in which an interlayer film is interposed between two glass sheets, or a laminated glass in which an interlayer film is interposed between a glass sheet and a PET film. The laminated glass 1 is a glass sheet-containing laminated body and preferably includes at least one glass sheet.

The glass sheet may be inorganic or organic glass. Examples of the inorganic glass include float plate glass, heat ray-absorbing plate glass, heat ray-reflecting plate glass, polished plate glass, molded plate glass, mesh-reinforced plate glass, wire-reinforced plate glass, and green glass. The organic glass is synthetic resin glass which may replace the inorganic glass. Examples thereof include polycarbonate sheets and poly(meth)acrylic resin sheets. Examples of the poly(meth)acrylic resin sheets include polymethyl(meth)acrylate sheets.

The thicknesses of the first and second laminated glass components 3 and 4 are each preferably not thinner than 1 mm and not thicker than 5 mm, and more preferably not thicker than 3 mm. When a glass sheet is used as the first or second laminated glass component 3 or 4, the thickness thereof is preferably not thinner than 1 mm and not thicker than 5 mm, and more preferably not thicker than 3 mm. When a PET film is used as the first or second laminated glass component 3 or 4, the thickness thereof is preferably 0.03 to 0.5 mm.

A method of producing the laminated glass 1 is not particularly limited. For example, the interlayer film 2 is interposed between the first and second laminated glass components 3 and 4 and the air left between each of the laminated glass components 3 and 4 and the interlayer film 2 was removed by a pressure roll or by vacuum draw in a rubber bag. Then, the layers are provisionally bonded at about 70°C to 110°C to provide a laminated body. The laminated body is pressure-bonded in an autoclave or by pressing, at about 120°C to 150°C at a pressure of about 1 to 1.5 MPa. In this manner, the laminated glass 1 is provided.

The laminated glass 1 may be employed for automobiles, railway cars, aircrafts, vessels, buildings, and the like. The laminated glass 1 may be used, for example, for wind shields, side window glass, rear window glass, or roof glass of automobiles. The laminated glass 1 may also be employed for applications other than these applications. Because of its high heat insulating performance, low Tts, and high visible transmittance, the laminated glass 1 is favorably employed for automobiles.

From the standpoint of obtaining a laminated glass having higher heat insulation property, the Tts of the laminated glass 1 is preferably not higher than 53%, preferably not higher than 50%, and preferably not higher than 40 %. Moreover, from the standpoint of obtaining a laminated glass having higher transparency, the visible transmittance of the laminated glass 1 is preferably not lower than 70%.

The laminated glass having the interlayer film for laminated glass of the present invention between two glass sheets each having a thickness of 2. 0 mm preferably has visible transmittance of not lower than 70%. Moreover, the laminated glass having the interlayer film for laminated glass of the present invention between two heat ray-absorbing glass sheets each having a thickness of 2.0 mm preferably has visible transmittance of not lower than 70%. The heat ray-absorbing glass sheets are preferably in accordance with JIS R3208. Especially, the laminated glass having an interlayer film for laminated glass having a thickness of 0.76 mm between two heat ray-absorbing glass sheets each having a thickness of 2.0 mm preferably has visible transmittance of not lower than 70%. Here, the visible transmittance is measured in accordance with JIS R3211 (1998) and refers to the visible transmittance of the obtained laminated glass at wavelengths of 380 to 780 nm. The device for measuring the visible transmittance is not particularly limited, and a spectrophotometer (Hitachi High-Technologies Corporation, "U-4100") may be used.

The present invention is described below in more detail with reference to examples. The present invention is not limited only to these examples.

(Example 1)

(1) Production of dispersion

An amount of 40 parts by weight of triethyleneglycol di-2-ethylhexanoate (3GO), 0.98 parts by weight of ITO particles (Mitsubishi Materials Corporation), and 0.0182 parts by weight of a naphthalocyanine compound (copper naphthalocyanine compound, FUJIFILM Corporation, "FF IRSORB203") were mixed. A phosphate ester compound as a dispersant was added thereto and the mixture was then mixed using a horizontal micro-bead mill to provide a mixed solution. Next, 0.1 parts by weight of acetyl acetone was added to the mixed solution with stirring to prepare dispersion. Here, the amount of the phosphate compound was set to be 1/10 of the amount of heat insulating particles.

(2) Production of interlayer film for laminated glass

The whole dispersion obtained above was added to 100 parts by weight of a polyvinylbutyral resin (butyralization degree of 68.5 mol%, hydroxy group content of 30.5 mol%). The mixture was sufficiently melted and kneaded using a mixing roll, and the resulting mixture was extruded using an extruder to provide an interlayer film having a thickness of 0.76 mm.

(3) Production of laminated glass

The obtained interlayer film for laminated glass was sandwiched between two heat ray-absorbing glass sheets (30 cm in height × 30 cm in width × 2.0 mm in thickness) in accordance with JIS R3208 to provide a laminated body. The laminated body was put in a rubber bag and deaeration was carried out at a vacuum of 2.6 kPa for 20 minutes. The laminated body being deaerated was transferred into an oven and held at 90°C for 30 minutes for vacuum press. In this manner, the laminated body was provisionally pressure-bonded. The provisionally-bonded laminated body was pressure-bonded in an autoclave at 135°C and 1.2 MPa for 20 minutes. Consequently, a laminated glass was obtained.

(Examples 2 to 13 and Comparative Examples 1 to 4)

Dispersions, interlayer films for laminated glass, and laminated glass were produced in the same manner as in Example 1 except that the composition (blending proportions) of the interlayer film for laminated glass was changed as shown in Table 1. Also in each of Examples 2 to 13 and Comparative Examples 1, 2, and 4, the amount of the phosphate compound was set to be 1/10 of the amount of heat insulating particles. In Comparative Example 3, no phosphate compound was used.

(Evaluations of Examples 1 to 13 and Comparative Examples 1 to 4)

(1) Measurement of Tts and Tds (Solar Direct Transmittance)

In accordance with the measuring method defined by the Cool Cars Standards which has been planned to be enforced, the Tts and the Tds of the obtained laminated glass were measured. Specifically, the Tts and the Tds were measured in accordance with JIS R3106 (1998) using a spectrophotometer (Hitachi High-Technologies Corporation, "U-4100").

(2) Measurement of visible transmittance

The visible transmittance of the obtained laminated glass was measured in accordance with JIS R3211 (1998) using a spectrophotometer (Hitachi High-Technologies Corporation, "U-4100") at wavelengths of 380 to 780 nm.

(3) Measurement of haze value

The haze value of the obtained laminated glass was measured in accordance with JIS K6714 using a haze meter (Tokyo Denshoku Co., Ltd., "TC-HIIIDPK").

(4) Measurement of color saturation level

The visible transmittance of the obtained laminated glass was measured in accordance with JIS R3211 (1998) using a spectrophotometer (Hitachi High-Technologies Corporation, "U-4100") at wavelengths of 380 to 780 nm. Next, a* and b* in L*a*b* colorimetric system were calculated in accordance with JIS Z8729. Based on the obtained a* and b*, the color saturation level C* in L*C*h* colorimetric system was calculated using the below equation:

$$[C*] = ([a*]^2 + [b*]^2)^{0.5}.$$

Table 1 shows the results. It is to be noted that Table 1 shows the volume average particle size of the heat insulating particles in the dispersion. In Table 1, *1 indicates the amount (parts by weight) relative to each 100 parts by weight of the thermoplastic resin and *2 indicates a proportion (g/m$^2$) in the interlayer film for laminated glass. Here, Table 1 does not indicate the amount of the phosphate compound.

[Table 1]

| | Kind of Heat Insulating Particles | Amount A of Heat Insulating Particles *1 (Parts by Weight) | Kind of Compound X | Amount B of of Compound X*1 (Parts by Weight) | Ratio (Amount A/ Amount B) | Concentration of Heat Insulating Particles *2 (g/m²) | Concentration of Compound X*2 (g/m²) | Volume Average Particle Size of Heat Insulating Particles (nm) | Tts (%) | Tds (%) | Visible Transmittance (%) | Haze Value (%) | Color Saturation Level C* |
|---|---|---|---|---|---|---|---|---|---|---|---|---|---|
| Ex. 1 | ITO | 0.98 | FF IRSORB203 | 0.0182 | 53.8 | 5.77 | 0.1 | 25.30 | 49.9 | 32.8 | 70.4 | 0.5 | 34.7 |
| Ex. 2 | ITO | 0.98 | FF IRSORB203 | 0.0203 | 48.3 | 5.77 | 0.12 | 25.30 | 49.4 | 32.1 | 70.0 | 0.5 | 37.5 |
| Ex. 3 | ITO | 0.14 | FF IRSORB203 | 0.0392 | 3.6 | 0.82 | 0.23 | 25.30 | 49.9 | 32.7 | 70.3 | 0.3 | 59.1 |
| Ex. 4 | ITO | 0.14 | FF IRSORB203 | 0.0408 | 3.4 | 0.82 | 0.24 | 25.30 | 49.7 | 32.4 | 70.0 | 0.3 | 60.5 |
| Ex. 5 | ITO | 0.63 | FF IRSORB203 | 0.0252 | 25.0 | 3.71 | 0.15 | 25.30 | 49.6 | 32.3 | 70.7 | 0.4 | 43.5 |
| Ex. 6 | ITO | 0.63 | FF IRSORB203 | 0.028 | 22.5 | 3.71 | 0.16 | 25.30 | 49.1 | 31.6 | 70.1 | 0.4 | 46.9 |
| Ex. 7 | ITO | 0.56 | FF IRSORB203 | 0.0252 | 22.2 | 3.30 | 0.15 | 25.30 | 49.9 | 32.7 | 71.0 | 0.3 | 43.5 |
| Ex. 8 | ITO | 0.56 | FF IRSORB203 | 0.028 | 20.0 | 3.30 | 0.16 | 25.30 | 49.3 | 31.9 | 70.4 | 0.4 | 46.9 |
| Ex. 9 | ITO | 1.14 | FF IRSORB203 | 0.0098 | 116.7 | 6.73 | 0.06 | 21.40 | 51.5 | 35.1 | 71.8 | 0.4 | 22.7 |
| Ex. 10 | ITO | 1.47 | FF IRSORB203 | 0.0070 | 210.0 | 8.65 | 0.04 | 21.40 | 51.5 | 35 | 71.0 | 0.5 | 19.0 |
| Ex. 11 | ITO | 1.47 | FF IRSORB203 | 0.0098 | 150.0 | 8.65 | 0.06 | 21.40 | 50.5 | 33.7 | 70.3 | 0.5 | 23.2 |

(continued)

| | Kind of Heat Insulating Particles | Amount A of Heat Insulating Particles *1 (Parts by Weight) | Kind of Compound X | Amount B of of Compound X*1 (Parts by Weight) | Ratio (Amount A/ Amount B) | Concentration of Heat Insulating Particles *2 (g/m²) | Concentration of Compound X*2 (g/m²) | Volume Average Particle Size of Heat Insulating Particles (nm) | Tts (%) | Tds (%) | Visible Transmittance (%) | Haze Value (%) | Color Saturation Level C* |
|---|---|---|---|---|---|---|---|---|---|---|---|---|---|
| Ex. 12 | ITO | 1.63 | FF IRSORB203 | 0.0028 | 583.3 | 9.61 | 0.02 | 21.40 | 52.2 | 36.1 | 71.0 | 0.5 | 13.0 |
| Ex. 13 | ITO | 1.80 | FF IRSORB203 | 0.0014 | 1.283.3 | 10.57 | 0.01 | 21.40 | 52.3 | 36.2 | 70.6 | 0.6 | 11.3 |
| Comp. Ex. 1 | ITO | 0.98 | - | 0 | - | 5.77 | 0 | 25.30 | 56.0 | 41.4 | 74.4 | 0.5 | 8.1 |
| Comp. Ex. 2 | ITO | 0.14 | FF IR$ORB203 | 0.049 | 2.9 | 0.82 | 0.29 | 25.30 | 48.5 | 30.7 | 68.4 | 0.3 | 6 68.2 |
| Comp. Ex. 3 | - | 0 | - | 0 | - | 0.00 | 0 | - | 64.1 | 52.6 | 79.5 | 0.3 | 6.0 |
| Comp. Ex. 4 | ITO | 1.8 | - | 0 | - | 10.59 | 0 | 21.00 | 54.6 | 38.5 | 69.7 | 0.6 | 10.8 |

(Example 14)

A dispersion, an interlayer film for laminated glass, and laminated glass were produced in the same manner as in Example 1 except that ITO particles (Mitsubishi Materials Corporation) were changed to IZO particles and the composition (blending proportions) of the interlayer film for laminated glass was changed as shown in Table 1. Also in Example 14, the amount of the phosphate compound was set to be 1/10 of the amount of the heat insulating particles.

(Example 15)

A dispersion, an interlayer film for laminated glass, and laminated glass were produced in the same manner as in Example 1 except that ITO particles (Mitsubishi Materials Corporation) were changed to ATO particles and the composition (blending proportions) of the interlayer film for laminated glass was changed as shown in Table 1. Also in Example 15, the amount of the phosphate compound was set to be 1/10 of the amount of the heat insulating particles.

(Evaluation of Examples 14 and 15)

Examples 14 and 15 were evaluated with regard to the same evaluation items (1) to (4) as those of Examples 1 to 13 and Comparative Examples 1 to 4.
Table 2 shows the results. It is to be noted that Table 2 shows the volume average particle size of the heat insulating particles in the dispersion. In Table 2, *1 indicates the amount (parts by weight) relative to each 100 parts by weight of the thermoplastic resin and *2 indicates a proportion (g/m$^2$) in the interlayer film for laminated glass. Here, Table 2 does not indicate the amount of the phosphate compound.

[Table 2]

| | Kind of Heat Insulating Particles | Amount A of Heat Insulating Particles *1 (Parts by Weight) | Kind of Compound X | Amount B of Compound X *1 (Parts by Weight) | Ratio (Amount A/Amount B) | Concentration of Heat Insulating Particles *2 (g/m$^2$) | Concentration of Compound X *2 (g/m$^2$) | Volume Average Particle Size of Heat Insulating Particles (nm) | Tts (%) | Tds (%) | Visible Transmittance (%) | Haze Value (%) | Color Saturation Level C* |
|---|---|---|---|---|---|---|---|---|---|---|---|---|---|
| Ex. 14 | IZO | 0.20 | FF IRSORB2O3 | 0.0182 | 10.8 | 1.15 | 0.11 | 23.10 | 56.5 | 40.4 | 70.9 | 0.3 | 35.0 |
| Ex. 15 | ATO | 0.98 | FF IRSORB203 | 0.0182 | 53.8 | 5.77 | 0 | 27.00 | 54.2 | 38.9 | 70.1 | 0.5 | 36.2 |

Here, a laminated glass obtained in the same manner as in Examples 1 to 15 and Comparative Examples 1 to 4 except that two transparent float glass sheets (30 cm in height $\times$ 30 cm in width $\times$ 2.5 mm in thickness) were used instead of two heat ray-absorbing glass sheets was evaluated with regard to Tts, Tds, visible transmittance, haze value, and color saturation level. The evaluation results have the same trend as those of Examples 1 to 15 and Comparative Examples 1 to 4.

**EXPLANATION OF SYMBOLS**

1    Laminated glass
2.    Interlayer film for laminated glass
3.    First laminated glass component
4.    Second laminated glass component
5.    ITO particles

**Claims**

1.    An interlayer film for laminated glass comprising:

a polyvinyl acetal resin;
a plasticizer;
heat insulating particles; and
at least one compound selected from the group consisting of a phthalocyanine compound, a naphtalocyanine compound, and an anthracyanine compound,
wherein, when an amount A represents the amount of the heat insulating particles to 100 parts by weight of the polyvinyl acetal resin and an amount B represents the amount of the compound to 100 parts by weight of the polyvinyl acetal resin, the amount A is 0.1 to 3 parts by weight and a ratio of the amount A to the amount B (the amount A/ the amount B) is 3 to 2000.

2.    The interlayer film for laminated glass according to claim 1,
wherein the ratio (the amount A/ the amount B) is 6 to 1300.

3.    The interlayer film for laminated glass according to claim 1,
wherein the ratio (the amount A/ the amount B) is 25 to 600.

4.    The interlayer film for laminated glass according to any one of claims 1 to 3,
wherein the amount A is 0.2 to 2 parts by weight.

5.    The interlayer film for laminated glass according to any one of claims 1 to 3,
wherein the amount B is 0.001 to 0.02 parts by weight.

6.    The interlayer film for laminated glass according to any one of claims 1 to 3,
wherein the compound is at least one compound selected from the group consisting of phthalocyanine, a phthalocyanine derivative, naphtalocyanine, and a naphtalocyanine derivative.

7.    The interlayer film for laminated glass according to any one of claims 1 to 3,
wherein the heat insulating particles are metal oxide particles.

8.    The interlayer film for laminated glass according to claim 7,
wherein the heat insulating particles are tin doped indium oxide particles.

9.    A laminated glass comprising:

a first and a second laminated glass components; and
an interlayer film interposed between the first and the second laminated glass components,
wherein the interlayer film is an interlayer film for laminated glass according to any one of claims 1 to 3.

**Patentansprüche**

1. Zwischenschichtfolie für Verbundglas, umfassend:

   ein Polyvinylacetalharz;
   einen Weichmacher;
   wärmeisolierende Teilchen; und
   mindestens eine Verbindung, gewählt aus der Gruppe, bestehend aus einer Phthalocyanin-Verbindung, einer Naphthalocyanin-Verbindung und einer Anthracyanin-Verbindung,
   wobei, wenn eine Menge A die Menge der wärmeisolierenden Teilchen bezogen auf 100 Gewichtsteile des Polyvinylacetalharzes und eine Menge B die Menge der Verbindung bezogen auf 100 Gewichtsteile des Polyvinylacetalharzes bedeuten, die Menge A 0,1 bis 3 Gewichtsteile beträgt und ein Verhältnis der Menge A zu der Menge B (die Menge A/ die Menge B) 3 bis 2000 beträgt.

2. Zwischenschichtfolie für Verbundglas nach Anspruch 1,
   wobei das Verhältnis (die Menge A/ die Menge B) 6 bis 1300 beträgt.

3. Zwischenschichtfolie für Verbundglas nach Anspruch 1,
   wobei das Verhältnis (die Menge A/ die Menge B) 25 bis 600 beträgt.

4. Zwischenschichtfolie für Verbundglas nach mindestens einem der Ansprüche 1 bis 3,
   wobei die Menge A 0,2 bis 2 Gewichtsteile beträgt.

5. Zwischenschichtfolie für Verbundglas nach mindestens einem der Ansprüche 1 bis 3,
   wobei die Menge B 0,001 bis 0,02 Gewichtsteile beträgt.

6. Zwischenschichtfolie für Verbundglas nach mindestens einem der Ansprüche 1 bis 3,
   wobei die Verbindung mindestens eine Verbindung ist, gewählt aus der Gruppe, bestehend aus Phthalocyanin, einem Phthalocyanin-Derivat, Naphthalocyanin und einem Naphthalocyanin-Derivat.

7. Zwischenschichtfolie für Verbundglas nach mindestens einem der Ansprüche 1 bis 3, wobei die wärmeisolierenden Teilchen Metalloxidteilchen sind.

8. Zwischenschichtfolie für Verbundglas nach Anspruch 7,
   wobei die wärmeisolierenden Teilchen mit Zinn dotierte Indiumoxidteilchen sind.

9. Verbundglas, umfassend:

   eine erste und eine zweite laminierte Glaskomponente; und
   eine Zwischenschichtfolie, welche zwischen der ersten und der zweiten laminierten Glaskomponente angeordnet ist,
   wobei die Zwischenschichtfolie eine Zwischenschichtfolie für Verbundglas gemäß mindestens einem der Ansprüche 1 bis 3 ist.

**Revendications**

1. Film intercouche pour un verre stratifié comprenait

   une résine d'acétal polyvinylique ;
   un plastifiant ;
   des particules d'isolation thermique ; et
   au moins un composé choisi dans le groupe constitué par un composé de phtalocyanine, un composé de naphtalocyanine et un composé d'anthracyanine,
   dans lequel une quantité A représenté la quantité des particules d'isolation thermique par rapport à 100 parties en poids de la résine d'acétal polyvinylique et une quantité B représente la quantité du composé par rapport à 100 parties en poids de la résine d'acétal polyvinylique, la quantité A est de l'ordre de 0,1 à 3 parties en poids et un rapport de la quantité A à la quantité B (quantité A/quantité B) est de l'ordre de 3 à 2000.

**2.** Film intercouche pour un verre stratifié selon la revendication 1,
dans lequel le rapport (quantité A/quantité B) est de l'ordre de 6 à 1300.

**3.** Film intercouche pour un verre stratifié selon la revendication 1,
dans lequel le rapport (quantité A/quantité B) est de l'ordre de 25 à 600.

**4.** Film intercouche pour un verre stratifié selon l'une quelconque des revendications 1 à 3,
dans lequel la quantité A est de l'ordre de 0,2 à 2 parties en poids.

**5.** Film intercouche pour un verre stratifié selon l'une quelconque des revendications 1 à 3,
dans lequel la quantité B est de l'ordre de 0,001 à 0,02 partie en poids.

**6.** Film intercouche pour un verre stratifié selon l'une quelconque des revendications 1 à 3,
dans lequel le composé est au moins un composé sélectionné dans le groupe constitué par la phtalocyanine, un
dérivé de la phtalocyanine, la naphtalocyanine et un dérivé de la naphtalocyanine.

**7.** Film intercouche pour un verre stratifié selon l'une quelconque des revendications 1 à 3,
dans lequel les particules d'isolation thermique sont des particules d'oxyde de métal.

**8.** Film intercouche pour un verre stratifié selon la revendication 7,
dans lequel les particules d'isolation thermique sont des particules d'oxyde d'indium dopées à l'étain.

**9.** Verre stratifié comprenant :

un premier et un second composant de verre stratifié ; et
un film intercouche intercalé entre le premier et le second composant de verre stratifié,
dans lequel le film intercouche est un film intercouche pour un verre stratifié selon l'une quelconque des revendications 1 à 3.

[FIG. 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0125162 A1